# EUROPÄISCHE PATENTSCHRIFT

(11) **EP 2 415 823 B1**
(45) Veröffentlichungstag und Bekanntmachung des Hinweises auf die Patenterteilung: **03.10.2012**
(21) Anmeldenummer: 10305845.9
(22) Anmeldetag: 30.07.2010
(51) Int. Cl.: C08J 3/24, C08L 23/08, H01B 3/44

(54) **Vernetzbare Polymermischung für Mäntel von Kabeln und Leitungen**
Networkable polymer mixture for covers of cables and conduits
Mélange polymère pouvant être mis en réseau pour enveloppes de câbles et de conduites

(43) Veröffentlichungstag der Anmeldung: 08.02.2012
(73) Patentinhaber: Nexans, 75008 Paris (FR)
(72) Erfinder: Cornelissen, Christian Dr., 41238 Mönchengladbach (DE); Ulfig, Peter, 54552 Mehren (DE)
(74) Vertreter: Taruttis, Stefan Georg

(56) Entgegenhaltungen:
- EP-A1- 0 802 224
- EP-A2- 1 319 686
- EP-A2- 1 441 004
- US-A1- 2008 093 107

## Beschreibung

Die vorliegende Erfindung betrifft eine Polymermischung, die zur Herstellung von Mänteln für optische oder elektrische Kabel und Leitungen geeignet ist, wobei die Polymermischung zur Erzeugung eines eine Kabelseele bzw. Leitungsseele umgebenden Mantels um dieselbe herum extrudiert und anschließend vernetzt wird. Diese vernetzbare Polymermischung ist nicht auf bestimmte Kabel oder Leitungen beschränkt. Die erfindungsgemäße Polymermischung zeichnet sich dadurch aus, dass sie einen Mantel mit besonders hoher Reißdehnung und/oder Flexibilität bei Raumtemperatur und auch bei tiefen Temperaturen, beispielsweise bis -40 °C aufweist, sowie eine hohe Beständigkeit gegen paraffinische und aromatische Mineralöle, beispielsweise Maschinenöl, Hydrauliköl, Getriebeöl und/oder Kühlflüssigkeit. Die Kabel oder Leitungen sind also entweder mit isolierten elektrischen Leitern oder Lichtwellenleitern aufgebaut. Es können aber auch sowohl isolierte elektrische Leiter als auch Lichtwellenleiter eingesetzt sein.

### Stand der Technik

Die US 6,830,777 B2 beschreibt eine vernetzbare Polymermischung für Kabelmäntel, die Polyethylen und ein Ethylen-Acrylat-Copolymer in Mischung mit Silan enthält, die in Gegenwart von Wasser oder Dampf unter Vernetzung aushärten.

### Aufgabe der Erfindung

Gegenüber dem Stand der Technik liegt die Aufgabe der Erfindung darin, eine alternative vernetzbare Polymermischung für einen Mantel eines Kabels oder einer Leitung bereitzustellen und ein Kabel oder eine Leitung mit einem Mantel aus der vernetzten Polymermischung bereitzustellen, wobei vorzugsweise der Mantel aus der Polymermischung nach deren Vernetzung eine erhöhte Beständigkeit gegen Öle und eine hohe Flexibilität auch bei niedrigen Temperaturen aufweist.

### Allgemeine Beschreibung der Erfindung

Die Erfindung löst die Aufgabe mit den Merkmalen der Ansprüche und insbesondere mit einer Polymermischung, die vernetzbar und halogenfrei ist. Die vernetzbare halogenfreie Polymermischung ist insbesondere zur Verwendung als Mantel von Kabeln oder Leitungen geeignet. Die erfindungsgemäße Polymermischung weist vernetzbare Bestandteile auf, die ein Alkylen-Vinylacetat-Copolymer mit zumindest 40 Gew.-% Vinylacetateinheiten und in Mischung damit ein Polyalkylenpolymer, das Dicarbonsäuregruppen, insbesondere zur 0,2 bis 2 Gew.-% aufweist, umfassen oder daraus bestehen. Die Alkylengruppen beider Polymere der vernetzbaren Bestandteile können voneinander unabhängig Ethylen- und/oder Propylengruppen sein. Die Carbonsäuregruppen des Polyalkylenpolymers können wahlweise als Säureanhydridgruppen und/oder als Estergruppen vorliegen. Das Polyalkylenpolymer mit Dicarboxylgruppen ist vorzugsweise ein Polyalkylenpfropfcopolymer, bei dem ein Polyalkylenpolymer mit zumindest einer dicarbonsäuregruppenhaltigen Verbindung gepfropft ist, wie beispielsweise Polyethylen, Polypropylen und/oder Polyethylen-Polypropylen-Copolymer, das mit Maleinsäureanhydrid oder einer Aryldicarbonsäure gepfropft ist.

Die vernetzbaren Bestandteile der erfindungsgemäßen Polymermischung weisen vorzugsweise auf oder bestehen aus dem Alkylen-Vinylacetat-Copolymer mit mindestens 40 Gew.-%, bevorzugt 50 bis 70 Gew.-% Vinylacetateinheiten und einem Polyalkylenpolymer mit Dicarbonsäuregruppen, insbesondere einem Polyalkylenpfropfcopolymer, dessen gepfropfte Gruppen Dicarbonsäuregruppen aufweisen. Ein bevorzugtes Alkylen-Vinylacetat-Copolymer ist Ethylen-Vinylacetat-Copolymer, erhältlich unter den Bezeichnungen EVA, EVAC und EVM, besonders bevorzugt mit einem Gehalt an Vinylacetateinheiten von zumindest 50 Gew.-%, 60 Gew.-% und/oder 70 Gew.-%, sowie Mischungen dieser.

Bevorzugt weist die erfindungsgemäße Mischung als vernetzbare Bestandteile auf oder besteht aus
5 bis 30 phr, vorzugsweise 10 bis 25 phr, bevorzugter 15-20 phr eines oder einer Mischung von Polyalkylenpropfcopolymeren mit einem Gehalt an 0,2 bis 2 Gew.-% Dicarbonsäureeinheiten, bevorzugt 0,5 bis 1,0 Gew.-% Dicarbonsäureeinheiten, wobei die Alkyleneinheiten bevorzugt Ethylen und/oder Propylen sind und die Dicarbonsäureeinheiten bevorzugt Maleinsäure sind, und
95 bis 70 phr, vorzugsweise 90 bis 75 phr, bevorzugter 85 bis 80 phr, noch bevorzugter 80 phr eines oder einer Mischung von Alkylen-Vinylacetat-Copolymeren mit insgesamt 40 Gew.-% oder mehr, vorzugsweise 50-70 Gew.-%, bevorzugter 60 Gew.-% Vinylacetateinheiten, wobei die Alkylen-Vinylacetat-Copolymeren insbesondere Ethylen-Vinylacetat-Copolymere sind.
Es hat sich gezeigt, dass die vernetzbaren Bestandteile der Polymermischung mit deren weiteren Bestandteilen, insbesondere einem flammhemmenden Füllstoff, Kaolin, Weichmacher, Alterungsschutzmittel, UV-Stabilisator, sowie optional Farbstoff und/oder Verarbeitungshilfsmittel in Gegenwart des in der Mischung enthaltenden Vernetzungssystems zu einer Polymermischung vernetzen. In dieser vernetzten Polymermischung sind die weiteren Bestandteile bzw. Zuschlagstoffe eingebunden, die keine mit dem Alkylen-Vinylacetat-Copolymer oder dem Polyalkylenpolymer mit Dicarbonsäuregruppen reaktiven Gruppen aufweisen, so dass das vernetzte Produkt einen halogenfreien Mantel mit hoher Beständigkeit gegen Öle und niedrige Temperaturen, insbesondere eine gute Flexibilität bei bis zu -40°C aufweist.

Die Beständigkeit gegenüber Öl ist dadurch gekennzeichnet, dass die vernetzte Polymermischung nach Alterung in Öl bei 70°C für 7 Tage und/oder bei 100 °C für 24 h oder länger eine Änderung der Zugfestigkeit von maximal 30% und der Reißdehnung von maximal 40% aufweist. Vorzugsweise ist das Öl das aromatische Mineralöl IRM903. Besonders bevorzugt weisen die vernetzten Polymermischungen die Flexibilität bei niedrigen Temperaturen in Kombination mit der Beständigkeit gegen Alterung in Öl auf, bevorzugter gegen Alterung in 2, 5 oder mehr, besonders bevorzugt gegen Alterung in allen Flüssigkeiten der folgenden Gruppe auf, die unter anderem Mineralöle und Kühlmittel umfasst: Mineralöle IRM902, IRM903, Getriebeöle Cognis Breox SL 320, Mobilgear SHC XMP 320, Shell Tivela SC 320, Texaco Meropa 320, Texaco Pinnacle WM 320, Tribol 1710/320, Hydrauliköle Mobil SHC 524, Texaco Rando HDZ LT 32, Texaco Rando WM 32 und/oder Kühlflüssigkeiten Dowcal 10 (50% Ethylenglycol), Havoline XLC +B -40 (50% Ethylenglycol).

Die Tieftemperaturflexibilität bei -40°C ist dadurch gekennzeichnet, dass die erfindungsgemäße vernetzte Polymermischung in der Prüfung auf Kältebeständigkeit nach IEC 60811-1-4 vorzugsweise zusätzlich eine Kältedehnung bei -40°C von mindestens 40% aufweist.

Zusätzlich zur hohen Ölbeständigkeit und Tieftemperaturflexibilität bei -40°C haben erfindungsgemäße vernetzte Polymermischungen gute mechanische Eigenschaften, wie z.B. eine Reißdehnung von ca. 300-450% bei Raumtemperatur und weisen vorzugsweise eine Abriebbeständigkeit von <300mm³, bevorzugter von 240 bis 270 mm³ nach ISO 4649 Verfahren A auf, die z.B. denen von Mantelmischungen auf Basis von PCP entsprechen.

Generell bevorzugt weisen erfindungsgemäße vernetzte Polymermischungen zusätzlich eine hohe Beständigkeit gegen Torsionsbelastungen auf, insbesondere bei -35°C, bevorzugt bei -40°C, mit Torsionen jeweils in jeder Richtung um 100° pro Meter, insbesondere pro Meter Leitung, über 5000 Zyklen oder mehr. Zusätzlich weisen erfindungsgemäße vernetzte Polymermischungen vorzugsweise eine geringe Wasseraufnahme, z.B. von maximal 15 mg/cm³ bei 70°C über 168 h (insbesondere gemäß IEC60811-1-3; 9-2) auf, besonders bevorzugt in Kombination mit einer hohen Flammbeständigkeit, z.B. gegen eine Flammdauer von 480s (insbesondere gemäß IEC60332-1-2), noch bevorzugter in Kombination mit einer geringen Korrosivität, z.B. einem pH-Wert von maximal 4,5 und einer maximalen Leitfähigkeit von 10µS/mm (insbesondere gemäß IEC60754-1/-2).

Es wird gegenwärtig angenommen, dass die Kombination von Eigenschaften einer hohen chemischen Beständigkeit gegen Öl mit der hohen Flexibilität auch bei niedrigen Temperaturen, die ein Mantel aus der vernetzten Polymermischung aufweist, auf deren Gehalt an Weichmacher und Füllstoffen in Kombination mit der Erzeugung chemischer Bindungen zwischen dem Alkylen-Vinylacetat-Copolymer und dem Polyalkylenpolymer mit Dicarbonsäuregruppen in Gegenwart des Vernetzungssystems zurückgeht, das insbesondere ein radikalisches Startersystem mit Polymerisationsbeschleuniger ist.

Bevorzugte Bestandteile bzw. Zuschlagstoffe der Polymermischung, die keine mit den vernetzbaren Bestandteilen reaktiven Gruppen aufweisen, sind flammhemmende Füllstoffe, insbesondere ausgewählt aus Aluminiumhydroxid, Magnesiumhydroxid und/oder Magnesiumcarbonat, zu insgesamt 100 bis 250 phr, bevorzugt 140 bis 180 phr, bevorzugter 150-160 phr,
Kaolin, insbesondere ausgewählt aus kalziniertem Kaolin, Hart-Kaolin, Weich-Kaolin und/oder Talkum zu 10 bis 30 phr, bevorzugter 12 bis 15 phr, insbesondere 12,5 phr, Weichmacher, insbesondere Adipat und/oder Sebacat, insbesondere Di-2-octylsebacat, zu 1 bis 25 phr, bevorzugt 10 bis 20 phr, bevorzugter 13 bis 15 phr,
Alterungsschutzmittel, beispielsweise TMQ (2,2,4-Trimethyl-1,2-dihydrochinolin), ZMBI (Zinksalz des 2-Mercaptobenzimidazols), MMBI (Methylmercaptobenzimidazol), ZMMBI (Zinksalz des 4-und 5-Methyl-2-mercaptobenzimidazols), Kombinationen von TMQ mit ZMBI, MMBI und ZMMBI, SDPA (styrolisiertes Diphenylamin), andere ASM (Klasse der substituierten Diphenylamine), vorzugsweise SDPA zu 1 bis 5 phr, bevorzugt 2 bis 3 phr, optional Farbstoff, der lichtecht, thermisch stabil, gegen die bei der peroxidischen Vernetzung auftretenden Reaktionsbedingungen und Reaktanden stabil, insbesondere gegen Peroxidradikale stabil, und vorzugsweise witterungsbeständig ist, beispielsweise Pigmente, z.B. Paligon Rot K 3580 oder Ruß oder Titandioxid mit einem UV-Stabilisator für helle Farben, zu 1 bis 5 phr, insbesondere 2,2 phr,
optional Verarbeitungshilfsmittel, insbesondere Wachse, Carbonsäureamide, Stearinsäure, Fettsäurederivate und/oder andere für EVAC-Mischungen geeignete Verbindungen, vorzugsweise Carnaubawachs oder eine Kombination aus Stearinsäure und 2,2-Iminodiethanol (Polyplastol 51) zu 3 bis 10 phr, bevorzugt 5 bis 7 phr.

Die in den Angaben zur Polymermischung angegebenen Teile sind als phr (*parts per hundred rubber*) zu verstehen, d.h. die Gewichtsteile der Bestandteile sind auf 100 Teile der vernetzbaren Bestandteile in der Mischung bezogen.

Als Vernetzungssystem wird vorzugsweise eine Peroxidverbindung verwendet, beispielsweise [1,3(oder 1,4)-phenylenbis(1-methylethyliden)]bis[tertbutyl]peroxid, bevorzugt mit einem Co-Aktivator, vorzugsweise einem Triallylcyanurat, z.B. 2,4,6-Tris(allyloxy)-1,3,5-triazin. Alternativ kann das Vernetzungssystem einen Co-Aktivator in Verbindung mit der Bestrahlung der Mischung mit ionisierender Strahlung aufweisen oder daraus bestehen.

Das Polyalkylenpolymer mit Dicarbonsäuregruppen ist vorzugsweise ein Pfropfcopolymer, bei dem Polyethylen, Polypropylen und/oder Ethylen-Propylen-Copolymer mit einer dicarbonsäuregruppenhaltigen Verbindung gepfropft sind, beispielsweise mit Maleinsäureanhydrid und/oder einem Aryldisäureester.

### Genaue Beschreibung der Erfindung

Die Erfindung wird nun genauer mit Bezug auf die Figuren beschrieben, die mechanische Eigenschaften erfindungsgemäßer vernetzter Polymermischungen zeigen, nämlich in
- Figur 1 die Kältedehnung bei -40 °C,
- Figur 2 die Änderungen der Zugfestigkeit nach Alterung der Polymermischung in Öl für 7 Tage bei 70 °C, und in
- Figur 3 die Änderung der Reißdehnung nach Alterung in Öl von 70 °C für 7 Tage.

Erfindungsgemäße Polymermischungen und Vergleichsmischungen wurden durch Mischen der in der nachfolgenden Tabelle in phr angegebenen Inhaltsstoffe nach Vormischung in einer Stufe in einem 2 Liter-Laborkneter mit einem Kneterfiillfaktor von 0,7 hergestellt.

**Tabelle: Zusammensetzung von Polymermischungen**

| | **Vergleichsmischung** | | **Mischung** | | | |
|---|---|---|---|---|---|---|
| **Bestandteil [phr]** | **1** | **2** | **3** | **4** | **5** | **6** |
| Levapren 700 HV | 20 | 30 | 40 | 50 | | |
| Levapren 600 HV | | | | | 80 | 80 |
| Levapren 500 HV | 60 | 50 | 40 | 30 | | |
| Polyalkylenpolymer mit Dicarbonsäuregruppen | 20 | 20 | 20 | 20 | 20 | 20 |
| Diphenylamin | 2,0 | 2,0 | 2,0 | 2,0 | 2,0 | 2,0 |
| UV-Schutzmittel | 1,5 | 1,5 | 1,5 | 1,5 | 1,5 | 1,5 |
| Titandioxid | 2,0 | 2,0 | 2,0 | 2,0 | 2,0 | 2,0 |
| Aluminiumhydroxid | 150 | 150 | 150 | 150 | 150 | 160 |
| kaliziniertes Kaolin | 12,50 | 12,50 | 12,50 | 12,50 | 12,50 | 12,50 |
| Weichmacher | 13 | 15 | 15 | 15 | 13 | 15 |
| Farbpigment | 2,2 | 2,2 | 2,2 | 2,2 | 2,2 | 2,2 |
| Wachs | 5,0 | 5,0 | 5,0 | 5,0 | 5,0 | 5,0 |
| Co-Aktivator | 0,5 | 0,5 | 0,5 | 0,5 | 0,5 | 0,5 |
| Peroxid | 8,0 | 8,0 | 8,0 | 8,0 | 8,0 | 8,0 |
| Dichte | 1,48 | 1,49 | 1,49 | 1,50 | 1,50 | 1,52 |
| Summe phr | 298,70 | 298,70 | 298,70 | 298,70 | 296,70 | 308,70 |

In den Beispielmischungen ist Levapren® als Ethylen-Vinylacetat-Copolymer (erhältlich von Lanxess) eingesetzt, wobei Levapren 700 etwa 70 Gew.-%, Levapren 600 etwa 60 Gew.-%, und Levapren 500 etwa 50 Gew.-% Vinylacetat-Einheiten enthält.

Das Polyalkylenpolymer mit Carbonsäuregruppen ist ein Ethylen-Propylen-Octen-Copolymer, das mit Maleinsäureanhydrid gepfropft ist und ca. 0,5 bis 1 Gew.-% Maleinsäureeinheiten enthält,
das Diphenylamin ist als Beispiel für ein Alterungsschutzmittel enthalten,
kalziniertes Kaolin ist als Beispiel für einen Kaolin-Füllstoff zugesetzt,
Wachs ist als Beispiel für ein Verarbeitungshilfsmittel zugesetzt.

Für die vernetzbaren Bestandteile, die in den Beispielen aus Levapren und dem Polyalkylenpolymer mit Dicarbonsäuregruppen bestehen, sind in der Tabelle Gewichtsanteile angegeben, und in Bezug auf die anderen, nicht vernetzbaren Zuschlagstoffe Gewichtsanteile in phr, d.h. auf Basis des Gesamtgewichts der vernetzbaren Bestandteile Levapren und Polyalkylenpolymer mit Carbonsäuregruppen.

Die Mischungen wurden als Mantel eines Kabels bzw. einer Leitung extrudiert und anschließend vernetzt, vorzugsweise bei einer Temperatur von ca. 160-200°C bis zur vollständigen Vernetzung.

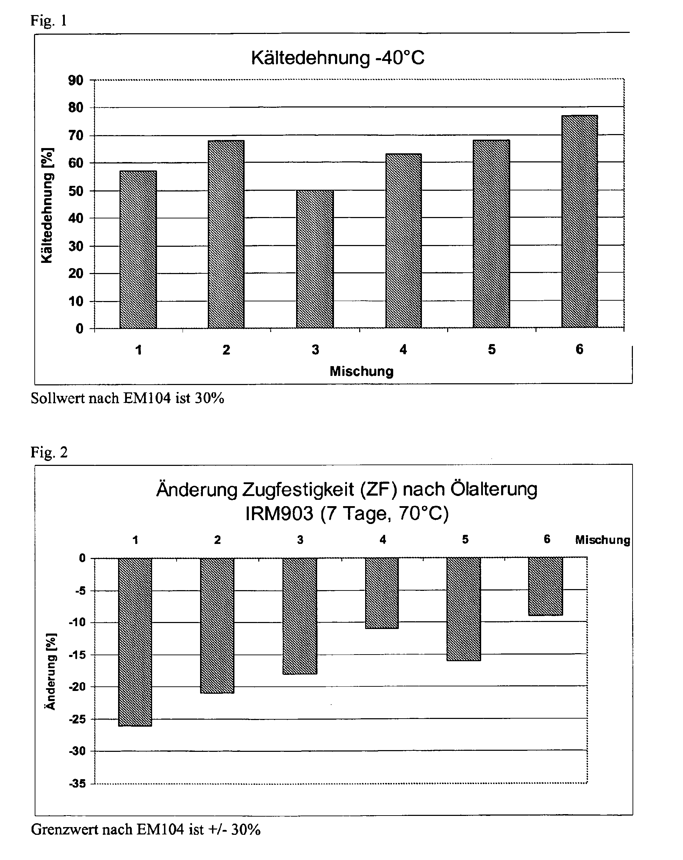

Anhand von Probestücken, die aus der vernetzten Polymermischung gemäß der Beispielzusammensetzungen bestanden, wurde die Kältedehnung bei -40 °C gemäß EN60811-1-4 gemessen. Die Messergebnisse sind in Fig. 1 gezeigt und machen deutlich, dass die erfindungsgemäßen Mischungen nach Vernetzung eine Kältedehnung bei -40°C von mindestens 50% haben, was deutlich über dem Niveau des Sollwerts von 30% der EM104 (DIN EN 50264-1) liegt. Erfindungsgemäße vernetzte Mischungen weisen daher bei -40°C eine Kältedehnung von mindestens 40% auf, bevorzugt von mindestens 50%, bevorzugter von mindestens 60%, noch bevorzugter von mindestens 70%, z.B. gemessen gemäß EN60811-1-4. Besonders bevorzugt weisen die Mischungen eine Kältedehnung von mindestens 30%, bevorzugt mindestens 40% auch bei -45°C auf, noch bevorzugter von mindestens 30% bei -50°C.

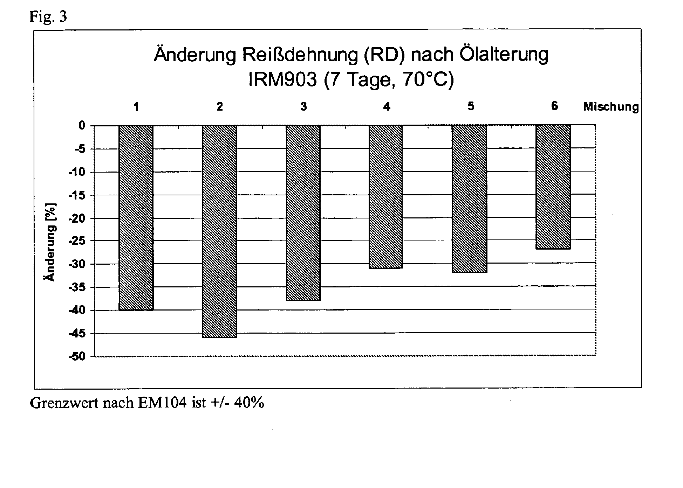

Die chemische Beständigkeit der vernetzten erfindungsgemäßen Polymermischungen wurde durch Ölalterung, z.B. Lagerung der Probenstücke in Öl bei 70 °C für 7 Tage geprüft, wobei die Zugfestigkeit und Reißdehnung vor und nach der Ölalterung gemessen wurden. Die Änderung der Zugfestigkeit erfindungsgemäßer vernetzter Polymermischungen ist in Fig. 2 gezeigt, die Änderung der Reißdehnung in Fig. 3, wobei das verwendete Öl ein Standard-Motoröl IRM 903 war.

Die in Fig. 2 gezeigten Daten für die Änderung der Zugfestigkeit zeigen, dass insbesondere die Mischungen Nr. 3 bis Nr. 6 nur einen geringen Abfall der Zugfestigkeit nach Ölalterung haben, wobei auch die Vergleichsmischungen Nr. 1 und 2 noch im Bereich der Abnahme der Zugfestigkeit um maximal 30% liegt, der von EM104 gefordert wird.

Erfindungsgemäße vernetzte Mischungen haben daher eine Reduktion der Zugfestigkeit nach Ölalterung, z.B. in Motoröl, um maximal 30%, bevorzugt um maximal 20%, bevorzugter um maximal 10%, z.B. gemessen nach DIN EN60811-2-1.

Die Reißdehnung erfindungsgemäßer vernetzter Polymermischungen, beispielsweise in der Prüfung gemäß EN60811-2-1, ist nach Lagerung in Getriebeöl, Hydrauliköl und/oder Mineralöl, sowie nach Lagerung in einer Kühlflüssigkeit, insbesondere Kühlflüssigkeit mit etwa 50% Ethylenglycol um maximal ca. 40% reduziert.

Die Auswertung der Messung der Reißdehnungen nach Ölalterung, in Fig. 3 als relative Änderung dargestellt, macht deutlich, dass erfindungsgemäße vernetzte Polymermischungen eine Abnahme der Reißdehnung um maximal 40% nach Ölalterung zeigen, bevorzugt um maximal 35%, bevorzugter um maximal 30%, z.B. gemessen nach IEC60811-2-1 Teil 10. Die erfindungsgemäßen vernetzten Mischungen 3 bis 6 haben geringere Reduktionen der Reißdehnung nach Ölalterung als Mischungen 1 und 2 und erfüllen sämtlich die Anforderung einer maximalen Änderung der Reißdehnung von +/- 40% gemäß EM104 (DIN EN 50264-1).

Aus den Beispielmischungen wird deutlich, dass bevorzugt das Alkylen-Vinylacetat-Copolymer zumindest 60 Gew.-% Vinylacetateinheiten aufweist. Weiter bevorzugt ist auch, dass das Alkylen-Vinylacetat-Copolymer eine im wesentlichen einheitliche Verteilung des Gehalts an Vinylacetateinheiten aufweist, sodass beispielsweise eine Mischung aus zwei Alkylen-Vinylacetat-Copolymeren, von denen das eine einen höheren Gehalt an Vinylacetateinheiten aufweist als das andere, weniger bevorzugt ist.

Die nachfolgende Tabelle zeigt weitere Eigenschaften von erfindungsgemäßen vernetzten Polymermischungen, beispielsweise die Beständigkeit gegen hohe Temperaturen, gegen weitere Öle sowie gegen 1N Oxalsäure und 1N Natronlauge anhand der Änderung der Zugfestigkeit und Reißdehnung nach Lagerung in den Medien.

| **Nr.** | **Prüfung** | **Prüfstandard** | **Prüfbedingungen** | **Grenzwerte** | **Bezug auf Bauart** | **Mischungen** | | | | |
|---|---|---|---|---|---|---|---|---|---|---|
| | | | | | | **1** | **3** | **4** | **5** | **6** |
| 1 | Zugfestigkeit | IEC60840; 12-4-3 | - | 6,5 N/mm² (typisch 10-11 N/mm²) | - | √ | √ | √ | √ | √ |
| 2 | Reißdehnung | IEC60840; 12-4-3 | - | 125% (typisch 300-450%) | EM104 (EN50264-1) | √ | √ | √ | √ | √ |
| 3 | Heißluftaterung | IEC60840; 12-4-3 | 100 °C,168 Stunden | Änderung Zugfestigkeit max. ± 30%; Änderung Reißdehnung max. ± 30%; | | √ | √ | √ | √ | √ |
| 4 | Wärmedehnung | IEC60502-2; 19-11 | 200°C, 15 min, 20 N/cm² Belastung | Dehnung unter Belastung max. 175%; Dehnung nach Belastung max. 15% | | √ | | | √ | √ |
| 5 | Lagerung in IRM902 | IEC60502-2; 19-12 | 100 °C, 24 Stunden | Änderung Zugfestigkeit max. ± 30%; Änderung Reißdehnung max. ± 40% | | √ | | | | √ |
| 6 | Lagerung in Cognis Breox SL 320 | IEC60502-2; 19-12 | 100 °C, 24 Stunden | Anderung Zugfestigkeit max. ± 30%; | | √ | | | | √ |
| | | | | Änderung Reißdehnung max. ± 40% | | | | | | |
| 7 | Lagerung in Mobilgear SHC XMP 320 | IEC60502-2; 19-12 | 100 °C, 24 Stunden | Änderung Zugfestigkeit max. ± 30%; | | √ | | | | √ |
| | | | | Änderung Reißdehnung max. ± 40% | | | | | | |
| 8 | Lagerung in Shell Tivela SC 320 | IEC60502-2; 19-12 | 100 °C, 24 Stunden | Änderung Zugfestigkeit max. ± 30%; | | √ | | | | √ |
| | | | | Änderung Reißdehnung max. ± 40% | | | | | | |
| 9 | Lagerung in Texaco Meropa 320 | IEC60502-2; 19-12 | 100 °C, 24 Stunden | Änderung Zugfestigkeit max. ± 30%; | | √ | | | | √ |
| | | | | Änderung Reißdehnung max. ± 40% | | | | | | |
| 10 | Lagerung in Texaco Pinnacle WM 320 | IEC60502-2; 19-12 | 100 °C, 24 Stunden | Änderung Zugfestigkeit max. ± 30%; | | √ | | | | √ |
| | | | | Änderung Reißdehnung max. ± 40% | | | | | | |
| 11 | Lagerung in Tribol 1710/320 | IEC60502-2; 19-12 | 100 °C, 24 Stunden | Änderung Zugfestigkeit max. ± 30%; | | √ | | | | √ |
| | | | | Änderung Reißdehnung max. ± 40% | | | | | | |
| 12 | Lagerung in Mobil SHC 524 | IEC60502-2; 19-12 | 100 °C, 24 Stunden | Änderung Zugfestigkeit max. ± 30%; | | √ | | | | √ |
| | | | | Änderung Reißdehnung max. ± 40% | | | | | | |
| 13 | Lagerung in Texaco Rando WM 32 | IEC60502-2; 19-12 | 100 °C, 24 Stunden | Änderung Zugfestigkeit max. ± 30%; | | X | √ | √ | √ | √ |
| | | | | Änderung Reißdehnung max. ± 40% | | | | | | |
| 14 | Lagerung in Havoline XLC +B -40 | IEC60502-2; 19-12 | 60 °C, 24 Stunden | Änderung Zugfestigkeit max. ± 30%; | | √ | | | | √ |
| | | | | Änderung Reißdehnung max. ± 40% | | | | | | |
| 15 | Lagerung in IRM903 | IEC60811-2-1; 10 | 70 °C,168 Stunden | Änderung Zugfestigkeit max. ± 30%; | EM104 (EN50264-1) | X | √ | √ | √ | √ |
| | | | | Änderung Reißdehnung max. ± 40% | | | | | | |
| 16 | Lagerung in 1 N-Oxalsäure | IEC60811-2-1; 10 | 23°C, 168 Stunden | Änderung Zugfestigkeit max. ± 30%; | EM104 (EN50264-1) | | | | | √ |
| | | | | Reißdehnung min. 100% | | | | | | |
| 17 | Lagerung in 1 N-Natronlauge | IEC60811-2-1; 10 | 23°C, 168 Stunden | Änderung Zugfestigkeit max. ± 30%; | EM104 (EN50264-1) | | | | | √ |
| | | | | Reißdehnung min. 100% | | | | | | |
| 18 | Kältedehnung | IEC6081 1-1-4; 8-4 | -40°C | min. 40% (typisch 45-60%) | - | √ | √ | √ | √ | √ |
| 19 | Abrieb | ISO4649 | - | < 300mm³ (typisch: 240-270mm³) | - | √ | | | | √ |
| 20 | Torsionsprüfung | - | -35°C/-40 C; ±100 °/m; 5000 Zyklen | keine Risse | - | | | | | √ |
| 21 | Wasseraufnahme | 60811-1-3; 9-2 | 70°C, 168 Stunden | max. 15 mg/cm2 Gewichtszunahme | EM104(EN50264-1) | | | | √ | √ |
| 22 | Ozonbeständigkeit | IEC60502-2; 19-10 | 250ppm Ozon; 25°C; 24h | keine Risse | - | √ | √ | √ | √ | √ |
| 23 | Korrosivität - pH-Wert + Leitfähigkeit | IEC60754-1/-2 | - | pH-Wert min. 4,5; Leitfähigkeit max. 10 µS/mm | - | | | | | √ |
| 24 | Verhalten im Brandfall | IEC60332-1-2 | Flammdauer 480 s | Abstand 1 > 50mm; Abstand 2 <540mm | - | | | | | √ |

Dabei bedeutet ein ✔, dass die Vorgabe bzw. der Grenzwert zumindest erreicht wird, und ein X, dass der Grenzwert nicht erreicht wird; ein Feld ohne Angabe bedeutet, dass dieser Wert nicht bestimmt wurde.

## Patentansprüche

1. Vemetzbare halogenfreie Polymermischung zur Verwendung für Mäntel von elektrischen und/oder optischen Kabeln oder Leitungen, **dadurch gekennzeichnet, dass** die Polymermischung
als vernetzbare Bestandteile 95 bis 70 phr zumindest eines Alkylen-Vinylacetat-Copolymers mit mindestens 40 Gew.-% Vinylacetateinheiten und 5 bis 30 phr zumindest eines Polyalkylenpolymers mit einem Gehalt von 0,2 bis 2 Gew.-% Dicarbonsäuregruppen
sowie ein Vernetzungssystem,
100 bis 250 phr eines flammhemmenden Füllstoffs,
10 bis 30 phr Kaolin und
1 bis 25 phr Weichmacher aufweist.

2. Vemetzbare Polymermischung nach Anspruch 1, **dadurch gekennzeichnet, dass** die vernetzbaren Bestandteile aus dem Alkylen-Vinylacetat-Copolymer und dem Polyalkylenpolymer mit Carbonsäuregruppen bestehen.

3. Vernetzbare Polymermischung nach einem der voranstehenden Ansprüche, **dadurch gekennzeichnet, dass** die Dicarbonsäuregruppen des Polyalkylenpolymers zumindest teilweise Säureanhydridgruppen sind und/oder verestert sind.

4. Vemetzbare Polymermischung nach einem der voranstehenden Ansprüche, **dadurch gekennzeichnet, dass** das Polyalkylenpolymer mit Dicarbonsäuregruppen ein Polyalkylenpropfcopolymer ist.

5. Vemetzbare Polymermischung nach Anspruch 4, **dadurch gekennzeichnet, dass** das Polyalkylenpropfcopolymer aufgepfropftes Maleinsäurenhydrid und/oder Arylsäureester aufweist.

6. Vernetzbare Polymermischung nach einem der voranstehenden Ansprüche, **dadurch gekennzeichnet, dass** die Alkyleneinheiten des Polyalkylenpolymers Ethylen und/oder Propylen sind.

7. Vemetzbare Polymermischung nach einem der voranstehenden Ansprüche, **dadurch gekennzeichnet, dass** das Alkylen-Vinylacetat-Copolymer ein Alkylen-Vinylacetat-Copolymer oder eine Mischung von Alkylen-Vinylacetat-Copolymeren mit zumindest 50 bis zumindest 70 Gew.-% Vinylacetateinheiten ist.

8. Vernetzbare Polymermischung nach einem der voranstehenden Ansprüche, **dadurch gekennzeichnet, dass** die Alkyleneinheiten des Alkylen-Vinylacetat-Copolymers Ethylen und/oder Propylen sind.

9. Vernetzbare Polymermischung nach einem der voranstehenden Ansprüche, **dadurch gekennzeichnet, dass** das Vemetzungssystem ein Peroxid und eine Co-Aktivatorverbindung aufweist.

10. Vernetzbare Polymermischung nach einem der Ansprüche 1 bis 7, **dadurch gekennzeichnet, dass** das Vernetzungssystem eine durch ionisierende Strahlung aktivierbare Co-Aktivatorverbindung aufweist.

11. Vernetzbare Polymermischung nach einem der voranstehenden Ansprüche, **gekennzeichnet durch** einen Gehalt an Alterungsschutzmittel, UV-Stabilisator, Farbstoff und/oder Verarbeitungshilfsmittel.

12. Verfahren zur Herstellung eines Mantels für elektrische und/oder optische Kabel oder Leitungen mit elektrischen Leitern oder Lichtwellenleiter durch Extrusion einer vernetzbaren Polymermischung, **dadurch gekennzeichnet, dass** die Polymermischung eine vernetzbare Polymermischung nach einem der voranstehenden Ansprüche aufweist und die Polymermischung nach Extrusion vernetzt wird.

13. Kabel oder Leitung mit einem Mantel, der durch Extrudieren und Vernetzen einer vernetzbaren Polymermischung erhältlich ist, **dadurch gekennzeichnet, dass** die Polymermischung eine nach einem der Ansprüche 1 bis 11 ist, wobei der Mantel eine Reißdehnung von mindestens 300% bei Raumtemperatur und eine Reißdehnung von mindestens 40% bei -40°C aufweist.

14. Kabel oder Leitung nach Anspruch 13, **dadurch gekennzeichnet, dass** der Mantel nach Lagerung in mineralischem Öl für 7 Tage bei 70°C eine Reduktion der Zugfestigkeit um maximal 30% aufweist.

15. Kabel oder Leitung nach Anspruch 13 oder 14, **dadurch gekennzeichnet, dass** der Mantel eine Abriebbeständigkeit von <300mm³ nach ISO 4649 Verfahren A aufweist.

## Claims

1. Crosslinkable halogen-free polymer mixture for use for sheathing of electrical and/or optical cables or lines, **characterized in that** the polymer mixture comprises as crosslinkable constituents from 95 to 70 phr of at least one alkylene-vinyl acetate copolymer having at least 40% by weight of vinyl acetate units and from 5 to 30 phr of at least one polyalkylene polymer having from 0.2 to 2% by weight content of dicarboxylic acid groups,
and a crosslinking system,
from 100 to 250 phr of a flame-retardant filler,
from 10 to 30 phr of kaolin and
from 1 to 25 phr of plasticizer.

2. Crosslinkable polymer mixture according to Claim 1, **characterized in that** the crosslinkable constituents consist of the alkylene-vinyl acetate copolymer and of the polyalkylene polymer having carboxylic acid groups.

3. Crosslinkable polymer mixture according to any of the preceding claims, **characterized in that** the dicarboxylic acid groups of the polyalkylene polymer at least to some extent are anhydride groups and/or have been esterified.

4. Crosslinkable polymer mixture according to any of the preceding claims, **characterized in that** the polyalkylene polymer having dicarboxylic acid groups is a polyalkylene graft copolymer.

5. Crosslinkable polymer mixture according to Claim 4, **characterized in that** the polyalkylene graft copolymer comprises aryl ester and/or maleic anhydride applied by grafting.

6. Crosslinkable polymer mixture according to any of the preceding claims, **characterized in that** the alkylene units of the polyalkylene polymer are ethylene and/or propylene.

7. Crosslinkable polymer mixture according to any of the preceding claims, **characterized in that** the alkylene-vinyl acetate copolymer is one alkylene-vinyl acetate copolymer or a mixture of alkylene-vinyl acetate copolymers having from at least 50 to at least 70% by weight of vinyl acetate units.

8. Crosslinkable polymer mixture according to any of the preceding claims, **characterized in that** the alkylene units of the alkylene-vinyl acetate copolymer are ethylene and/or propylene.

9. Crosslinkable polymer mixture according to any of the preceding claims, **characterized in that** the crosslinking system comprises a peroxide and a co-activator compound.

10. Crosslinkable polymer mixture according to any of Claims 1 to 7, **characterized in that** the crosslinking system comprises a co-activator compound that can be activated via ionizing radiation.

11. Crosslinkable polymer mixture according to any of the preceding claims, **characterized by** content of antioxidant, UV stabilizer, dye and/or processing aid.

12. Process for producing sheathing for electrical and/or optical cables or lines with electrical conductors or optical waveguides via extrusion of a crosslinkable polymer mixture, **characterized in that** the polymer mixture comprises a crosslinkable polymer mixture according to any of the preceding claims and the polymer mixture is crosslinked after extrusion.

13. Cable or line with sheathing which is obtainable via extrusion and crosslinking of a crosslinkable polymer mixture, **characterized in that** the polymer mixture is a mixture according to any of Claims 1 to 11, where the tensile strain at break of the sheathing is at least 300% at room temperature and is at least 40% at -40°C.

14. Cable or line according to Claim 13, **characterized in that** the sheathing exhibits a reduction in tensile strength of at most 30% after storage for 7 days at 70 °C in mineral oil.

15. Cable or line according to Claim 13 or 14, **characterized in that** the abrasion resistance value of the sheathing is < 300 mm³ in accordance with ISO 4649 Method A.

## Revendications

1. Mélange polymère sans halogène réticulable destiné à être utilisé pour des enveloppes de câbles ou de conduites électriques et/ou optiques, **caractérisé en ce que** le mélange polymère comprend
en tant que constituants réticulables 95 à 70 phr d'un copolymère alkylène-acétate de vinyle contenant au moins 40 % en poids d'unités acétate de vinyle et 5 à 30 phr d'au moins un polymère de polyalkylène ayant une teneur de 0,2 à 2 % en poids en groupes acide dicarboxylique,
ainsi qu'un système de réticulation,
100 à 250 phr d'une charge ignifuge,
10 à 30 phr de kaolin et
1 à 25 phr de plastifiant.

2. Mélange polymère réticulable selon la revendication 1, **caractérisé en ce que** les constituants réticulables sont constitués par le copolymère alkylène-acétate de vinyle et le polymère de polyalkylène contenant des groupes acide carboxylique.

3. Mélange polymère réticulable selon l'une quelconque des revendications précédentes, **caractérisé en ce que** les groupes acide dicarboxylique du polymère de polyalkylène sont au moins en partie des groupes anhydride d'acide et/ou estérifiés.

4. Mélange polymère réticulable selon l'une quelconque des revendications précédentes, **caractérisé en ce que** le polymère de polyalkylène contenant des groupes acide dicarboxylique est un copolymère greffé de polyalkylène.

5. Mélange polymère réticulable selon la revendication 4, **caractérisé en ce que** le copolymère greffé de polyalkylène comprend un anhydride d'acide maléique et/ou un ester d'acide acrylique greffé.

6. Mélange polymère réticulable selon l'une quelconque des revendications précédentes, **caractérisé en ce que** les unités alkylène du polymère de polyalkylène sont de l'éthylène et/ou du propylène.

7. Mélange polymère réticulable selon l'une quelconque des revendications précédentes, **caractérisé en ce que** le copolymère alkylène-acétate de vinyle est un copolymère alkylène-acétate de vinyle ou un mélange de copolymères alkylène-acétate de vinyle contenant au moins 50 à au moins 70 % en poids d'unités acétate de vinyle.

8. Mélange polymère réticulable selon l'une quelconque des revendications précédentes, **caractérisé en ce que** les unités alkylène du copolymère alkylène-acétate de vinyle sont de l'éthylène et/ou du propylène.

9. Mélange polymère réticulable selon l'une quelconque des revendications précédentes, **caractérisé en ce que** le système de réticulation comprend un peroxyde et un composé co-activateur.

10. Mélange polymère réticulable selon l'une quelconque des revendications 1 à 7, **caractérisé en ce que** le système de réticulation comprend un composé co-activateur activable par rayonnement ionisant.

11. Mélange polymère réticulable selon l'une quelconque des revendications précédentes, **caractérisé par** une teneur en agent antivieillissement, stabilisateur UV, colorant et/ou adjuvant d'usinage.

12. Procédé de fabrication d'une enveloppe pour câbles ou conduites électriques et/ou optiques contenant des conducteurs électriques ou des fibres optiques par extrusion d'un mélange polymère réticulable, **caractérisé en ce que** le mélange polymère comprend un mélange polymère réticulable selon l'une quelconque des revendications précédentes et le mélange polymère est réticulé après l'extrusion.

13. Câble ou conduite comprenant une enveloppe, qui peut être obtenue par extrusion et réticulation d'un mélange polymère réticulable, **caractérisé en ce que** le mélange polymère est un mélange polymère selon l'une quelconque des revendications 1 à 11, l'enveloppe présentant un allongement à la rupture d'au moins 300 % à température ambiante et un allongement à la rupture d'au moins 40 % à -40 °C.

14. Câble ou conduite selon la revendication 13, **caractérisé en ce que** l'enveloppe présente après entreposage dans une huile minérale pendant 7 jours à 70 °C une réduction de la résistance à la traction d'au plus 30 %.

15. Câble ou conduite selon la revendication 13 ou 14, **caractérisé en ce que** l'enveloppe présente une résistance à l'abrasion < 300 mm³ selon ISO 4649 Procédé A.
